# FASCICULE DE BREVET EUROPEEN

(11) **EP 1 495 964 B1**
(45) Date de publication et mention de la délivrance du brevet: **23.04.2008**
(21) Numéro de dépôt: 04291703.9
(22) Date de dépôt: 05.07.2004
(51) Int. Cl.: B64G 1/50, H01J 23/033

(54) **Dispositif de dissipation de chaleur à double conduction, pour un engin spatial**
Wärmeabführeinrichtung mit doppelter Leitung für Raumfahrzeug
Heat dissipation device with double conduction for spacecraft

(30) Priorité: 11.07.2003 FR 0308520
(43) Date de publication de la demande: 12.01.2005
(73) Titulaire: Alcatel Lucent, 75008 Paris (FR)
(72) Inventeur: Combes, Charles, 31190 Grepiac (FR); Foucher, Jean-Luc, 31600 Seysses (FR); Jaubert, Pierre, 31170 Tournefeuille (FR)
(74) Mandataire: Esselin, Sophie

(56) Documents cités:
- EP-A- 0 687 627

## Description

L'invention concerne le domaine des engins spatiaux, et plus particulièrement les dispositifs utilisés pour dissiper la chaleur produite par certains composants (ou équipements) embarqués à bord de tels engins.

Comme le sait l'homme de l'art, certains engins spatiaux comportent des composants, tels que des tubes à onde progressive, chargés d'amplifier des signaux à émettre. Ces tubes à onde progressive produisent une importante quantité de chaleur qu'il est indispensable de dissiper dans l'espace. Pour ce faire, il a tout d'abord été proposé de coupler thermiquement, par l'intermédiaire de dispositifs de transfert de chaleur tels que des caloducs ou des tubes à circulation de fluide caloporteur, les corps des tubes à onde progressive à un panneau radiatif chargé de rayonner la chaleur dans l'espace.

Cela ne suffisant pas, il a ensuite été proposé, notamment dans le document US 5,862,462, de coupler le corps de chaque tube à onde progressive à un collecteur muni d'un radiateur à haute température chargé de rayonner la chaleur dans l'espace. Les radiateurs étant indépendants les uns des autres, les tubes sont quasiment indépendants les uns des autres d'un point de vue radiatif, ce qui n'est pas favorable en matière de dissipation, d'environnement et de mode de fonctionnement. Ce mode de dissipation thermique permet de dissiper vers l'espace environ 50% de la puissance produite dans le mode saturation.

Cela n'est pas satisfaisant compte tenu de la puissance toujours croissante qui doit être dissipée, laquelle va généralement de pair avec l'augmentation de la complexité des aménagements, notamment sur les faces est-ouest des engins spatiaux (présence de grands réflecteurs d'antenne et de leurs mécanismes de support (ou HRMs pour « Hold on Release Mechanism »), de sources d'émission/réception de grandes dimensions et des radiateurs associés, de supports de tuyères, de collecteurs voisins, etc), qui réduit sensiblement l'efficacité de l'échange radiatif avec l'espace.

En d'autres termes, en raison de la dissipation de chaleur insuffisante, chaque engin spatial doit faire l'objet, compte tenu des limitations technologiques de ses tubes à onde progressive, d'une configuration spécifique et/ou d'une limitation de la puissance RF de sa charge utile.

Par ailleurs, le mode de dissipation présenté ci-avant impose un environnement dédié pour chaque tube à onde progressive lors des tests des équipements embarqués.

Des dispositifs alternatifs sont proposés dans EP 0 687 627, qui est considéré comme l'art antérieur le plus proche.

L'invention a donc pour but d'améliorer la situation.

Elle propose à cet effet un dispositif, dédié à la dissipation de la chaleur produite par des tubes d'amplification d'un engin spatial, et comportant un panneau radiatif installé sensiblement dans le plan des tubes d'amplification et couplé thermiquement à leurs corps, éventuellement via des moyens de transfert de chaleur, afin de rayonner vers l'extérieur (dans l'espace) une partie de la chaleur qu'ils produisent.

Ce dispositif se caractérise par le fait qu'il comprend un réceptacle (ou rail) radiatif, dont les parois définissent un logement pouvant recevoir les collecteurs des tubes d'amplification, et propre à être couplé thermiquement aux collecteurs par l'une au moins des ses parois de sorte que la chaleur qu'ils produisent soit répartie sur cette paroi et entre les collecteurs.

De la sorte, les tubes d'amplification fonctionnent selon deux températures de conduction différentes, l'une modérée au niveau des corps de tube, et l'autre élevée au niveau des collecteurs de tube, mais répartie et contrôlée par un réceptacle radiatif couplé thermiquement auxdits collecteurs.

Selon une autre caractéristique de l'invention, le dispositif comprend préférentiellement au moins un premier moyen de répartition de chaleur propre à assurer le couplage thermique entre les collecteurs et l'une au moins des parois du réceptacle radiatif, et agencé de manière à répartir entre les collecteurs et sur la paroi la chaleur que lesdits collecteurs produisent. Par exemple, le premier moyen de répartition de chaleur peut être intercalé entre les collecteurs et l'une des parois du réceptacle radiatif. Mais, il peut être également placé à l'extérieur du réceptacle radiatif (et au contact de celui-ci), ou bien intégré dans celui-ci.

Cela permet d'améliorer notablement, et d'homogénéiser, la répartition de la chaleur entre les collecteurs et la paroi.

Dans un mode de réalisation préférentiel, le réceptacle comprend trois parois qui définissent une « gouttière radiative », de préférence de section transverse sensiblement en U. Dans ce cas, il est avantageux de prévoir un autre moyen de répartition de chaleur préférentiellement intercalé entre les collecteurs et une autre des trois parois du réceptacle et agencé de manière à répartir entre les collecteurs et sur l'autre paroi la chaleur que les collecteurs produisent. Comme dans le cas du premier moyen de répartition de chaleur, le second moyen de répartition de chaleur peut en variante être placé à l'extérieur du réceptacle radiatif (et au contact de celui-ci), ou bien intégré dans celui-ci.

Par ailleurs, chaque moyen de répartition de chaleur peut être réalisé sous la forme d'au moins une barre en matériau conducteur thermiquement, ou d'au moins un caloduc, ou encore d'au moins un tube dans lequel circule un fluide caloporteur.

En outre, le réceptacle est préférentiellement réalisé dans un matériau choisi pour ses propriétés thermiques et mécaniques, tel que l'aluminium.

Selon une autre caractéristique de l'invention, le réceptacle est préférentiellement solidarisé aux collecteurs, directement ou indirectement.

L'invention porte également sur un engin spatial comportant des tubes d'amplification et au moins un dispositif de dissipation de chaleur du type de celui présenté ci-avant. Par exemple, l'engin spatial comprend un ou plusieurs dispositifs de dissipation de chaleur munis de réceptacles (ou rails) radiatifs sensiblement parallèles entre eux et s'étendant, en fonctionnement, dans des plans sensiblement perpendiculaires à une direction nord-sud, et/ou un ou plusieurs dispositifs de dissipation de chaleur munis de réceptacles (ou rails) radiatifs sensiblement parallèles entre eux et s'étendant, en fonctionnement, dans des plans sensiblement perpendiculaires à une direction est-ouest.

L'invention est particulièrement bien adaptée aux engins spatiaux tels que les satellites, en particulier de télécommunications, mais elle peut également être embarquée sur des satellites d'observation, des sondes spatiales, des stations orbitales ou des vaisseaux spatiaux.

D'autres caractéristiques et avantages de l'invention apparaîtront à l'examen de la description détaillée ci-après, et des dessins annexés, sur lesquels :
- la figure 1 est un schéma de principe illustrant un dispositif de dissipation de chaleur selon l'invention,
- la figure 2 est une vue en coupe selon l'axe II-II de la figure 1, et
- la figure 3 illustre de façon schématique, dans une vue de côté, un exemple de réalisation d'une partie d'un dispositif de dissipation de chaleur selon l'invention.

Les dessins annexés pourront non seulement servir à compléter l'invention, mais aussi contribuer à sa définition, le cas échéant.

L'invention a pour objet de permettre la dissipation d'une grande partie de la chaleur produite par des tubes d'amplification embarqués dans un engin spatial.

On entend ici par « engin spatial », tout type d'engin ou véhicule circulant dans l'espace, en orbite (haute, basse ou géostationnaire) ou libéré de l'attraction gravitationnelle terrestre, et agencé de manière à transmettre des signaux après les avoir amplifiés, et en particulier les satellites, notamment de télécommunications ou d'observation, les sondes spatiales, les stations orbitales ou les vaisseaux spatiaux.

Dans ce qui suit, on considérera à titre d'exemple illustratif que l'engin spatial est un satellite de télécommunications.

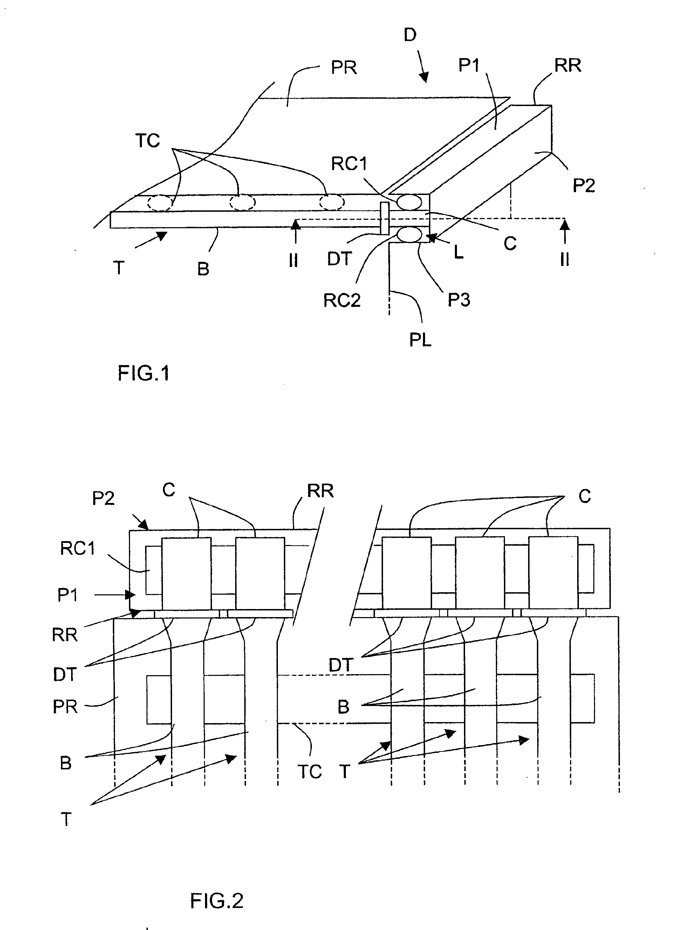

Un satellite de télécommunications comporte des moyens d'amplification chargés d'amplifier les signaux à émettre, avant qu'ils ne soient transmis vers une station terrestre. Généralement, ces moyens d'amplification sont réalisés sous la forme de tubes d'amplification, tels que des tubes à onde progressive (ou TWTs pour « Traveling Wave Tubes ») T du type de ceux illustrés de façon très schématique et partielle sur les figures 1 à 3.

Un tube à onde progressive T comporte classiquement un corps B, par exemple de forme générale parallélépipédique, raccordé à un collecteur C, par exemple en forme de cône ou de bol ou encore de cylindre, de préférence via un élément de découplage thermique DT. La liaison entre ces trois parties de tube T peut être obtenue par tout moyen, et notamment par soudage, collage ou vissage.

Le corps B et le collecteur C sont réalisés dans des matériaux qui sont de bons conducteurs thermiques, contrairement au découpleur thermique DT qui est peu conducteur thermiquement, afin d'assurer une sorte d'isolation thermique entre le corps B, présentant en fonctionnement une température modérée, et le collecteur C, présentant en fonctionnement une température élevée. Le découpleur thermique DT est par exemple réalisé sous la forme d'une pièce métallique isolante thermiquement.

Contrairement aux tubes de l'art antérieur, les tubes de l'invention ne sont pas équipés d'un collecteur muni d'un radiateur destiné à rayonner la chaleur dans l'espace. Ici, les collecteurs C des tubes T se contentent d'être essentiellement conductifs.

Les corps B des tubes T sont généralement parallèles les uns aux autres et en contact thermique, par exemple par l'intermédiaire de moyens de transfert de chaleur TC tels qu'un ou plusieurs caloducs ou tubes à fluide caloporteur, avec un panneau radiatif PR, par exemple en aluminium, destiné à rayonner dans l'espace la chaleur qu'il reçoit. Selon l'orientation du satellite, le panneau radiatif PR est dit « nord », « sud », « est » ou « ouest » selon qu'il est installé dans un plan sensiblement perpendiculaire à l'une de ces quatre directions. Un satellite peut par exemple comporter un panneau radiatif nord et/ou un panneau radiatif sud et/ou un panneau radiatif est et/ou un panneau radiatif ouest.

Par exemple, les tubes T, couplés thermiquement à un panneau radiatif PR nord ou sud, sont sensiblement parallèles à la direction est-ouest.

Dans ce qui suit, on considère que le satellite comporte un panneau radiatif nord (ou sud) sensiblement perpendiculaire à des panneaux latéraux est et ouest PL, par exemple revêtus d'un matériau multicouches isolant thermiquement (ou MLI pour « Multi Layer Insulation »).

Le panneau radiatif PR et les éventuels moyens de transfert de chaleur TC font partie d'un dispositif de dissipation de chaleur D qui, selon l'invention, comporte également un réceptacle radiatif RR dont les parois (P1-P3) définissent un logement L recevant les collecteurs C des tubes d'amplification T, et qui est couplé thermiquement aux collecteurs C par l'une au moins desdites parois P1 afin de répartir la chaleur qu'ils produisent (et/ou reçoivent) entre les collecteurs C et sur la paroi P1.

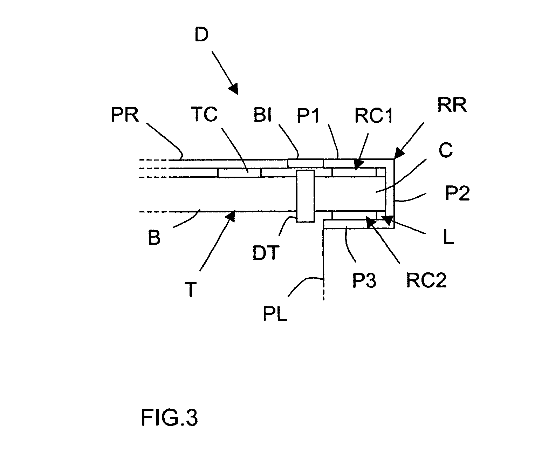

Dans l'exemple illustré sur les figures 1 et 3, le réceptacle radiatif RR comprend trois parois P1, P2 et P3, sensiblement perpendiculaires deux à deux en définissant une espèce de gouttière ou de rail, de préférence de section transverse sensiblement en U.

Le réceptacle radiatif RR est par exemple réalisé dans le même matériau radiatif que le panneau radiatif PR.

Par ailleurs, le réceptacle radiatif RR est préférentiellement solidarisé aux collecteurs C, directement ou indirectement, par exemple par l'intermédiaire de moyens de répartition de chaleur (RC1, RC2) sur lesquels on reviendra ci-après.

En outre, comme cela est illustré sur la figure 3, il est avantageux de placer au niveau de l'intervalle séparant le réceptacle (ou rail) RR du panneau PR une bande d'isolation BI, par exemple en MLI (pour « MultiLayer Insulation »).

De plus, le réceptacle radiatif RR est préférentiellement destiné à être installé sur le satellite de manière à disposer d'un facteur de vue avec l'espace élevé lui permettant d'assurer une dissipation efficace de la chaleur.

Comme cela est illustré sur les figures 1 et 3, dans un mode de réalisation préférentiel, le dispositif D comprend également au moins un moyen de répartition de chaleur RC1 préférentiellement intercalé étroitement entre les collecteurs C et l'une des parois du réceptacle radiatif RR et chargé de répartir entre les différents collecteurs C et sur la paroi P1 qu'il contacte la chaleur que les collecteurs C produisent (et/ou reçoivent).

Plus préférentiellement encore, le dispositif D comporte un autre moyen de répartition de chaleur RC2 préférentiellement intercalé étroitement entre les collecteurs C et une autre des trois parois P3 du réceptacle radiatif RR et chargé de répartir entre les différents collecteurs C et sur la paroi P3 qu'il contacte la chaleur que les collecteurs produisent (et/ou reçoivent).

Dans l'exemple illustré, les deux moyens de répartition de chaleur RC1 et RC2 sont réalisés sous la forme de barres pleines en matériau conducteur thermiquement, comme par exemple en aluminium. Mais, dans des variantes, ces moyens de répartition de chaleur RC1 et RC2 pourraient être réalisés sous la forme de dispositifs de transfert de chaleur tels que des caloducs (ou « heat pipes ») ou des tubes dans lesquels circule un fluide caloporteur.

Par ailleurs, on peut envisager d'interposer entre les collecteurs C et chaque répartiteur de chaleur RC1, RC2, un joint glissant destiné à limiter les efforts thermoélastiques subis par le tube d'amplification T. Un tel joint glissant peut être par exemple réalisé sous la forme d'un matériau en feuilles conducteur thermiquement, comme par exemple à base de graphite.

Grâce à l'invention, le dispositif D assure une double conduction, l'une par le panneau radiatif PR en contact thermique avec les corps B des tubes d'amplification T, l'autre par le réceptacle radiatif RR en contact thermique, de préférence via les répartiteurs de chaleur RC, avec les collecteurs C desdits tubes T. La première conduction s'effectue ainsi selon une température modérée au niveau des corps de tube, et l'autre élevée au niveau des collecteurs de tube. Cette double conduction est particulièrement efficace du fait que le réceptacle (ou rail) radiatif RR est découplé thermiquement du panneau PR.

Par ailleurs, la répartition de chaleur, offerte par l'invention, entre les différents collecteurs C et les parois P1-P3 du réceptacle radiatif RR, permet :
- de réduire la température des tubes d'amplification T de quelques dizaines de degrés celsius, typiquement 30°C à 40°C, ce qui correspond à un gain de puissance rayonnée de 30% à 40%, permettant d'augmenter la puissance RF d'environ 20%,
- de moyenner les cyclages thermiques sur l'ensemble du dispositif de dissipation de chaleur D,
- de réduire sensiblement la fatigue mécanique des tubes d'amplification T,
- de réduire les contraintes d'espacement entre les tubes d'amplification T,
- de simplifier les interfaces mécaniques/thermiques lors du test des équipements embarqués dans l'engin spatial,
- de faciliter la standardisation des interfaces mécaniques et thermiques des tubes.

L'invention ne se limite pas aux modes de réalisation de dispositif de dissipation de chaleur et d'engin spatial décrits ci-avant, seulement à titre d'exemple, mais elle englobe toutes les variantes que pourra envisager l'homme de l'art dans le cadre des revendications ci-après.

Ainsi, dans ce qui précède, on a décrit une application de l'invention aux satellites de télécommunications. Mais, l'invention concerne d'une manière générale tout type d'engin ou véhicule circulant dans l'espace et devant dissiper de l'énergie produite par des composants électroniques, tels que des amplificateurs de signaux, et notamment les satellites d'observation, les sondes spatiales, les stations orbitales ou les vaisseaux spatiaux.

Par ailleurs, on a décrit un réceptacle (ou rail) radiatif présentant une section en forme de U. Mais, le réceptacle (ou rail) radiatif peut se présenter sous une forme quelconque, et notamment sous la forme d'une équerre ou d'une gouttière.

En outre, dans ce qui précède, on a décrit un mode de réalisation dans lequel les moyens de répartition de chaleur (RC1, RC2) étaient intercalés entre les collecteurs et les parois des réceptacles (ou rails) radiatifs. Mais, on peut envisager une variante dans laquelle les moyens de répartition de chaleur sont placés à l'extérieur des réceptacles, certaines parois des réceptacles présentant alors une face interne au contact des collecteurs et une face externe au contact des moyens de répartition de chaleur. Dans ce cas, les moyens de répartition de chaleur permettent d'augmenter la surface radiative des collecteurs et de répartir la chaleur entre eux, via la paroi du réceptacle radiatif. On peut également envisager une autre variante dans laquelle l'une au moins des parois des réceptacles (ou rails) radiatifs est au moins en partie creuse (ou conformée) de manière à intégrer les moyens de répartition de chaleur (RC1, RC2).

De même, on a décrit un mode de réalisation dans lequel les moyens de transfert de chaleur (TC) étaient intercalés entre les corps des tubes d'amplification et le panneau radiatif. Mais, on peut envisager une variante dans laquelle les moyens de transfert de chaleur sont placés au-dessus du panneau radiatif, celui-ci présentant alors une face interne au contact des corps et une face externe au contact des moyens de transfert de chaleur. On peut également envisager une autre variante dans laquelle le panneau radiatif est au moins en partie creux (ou conformé) de manière à intégrer les moyens de transfert de chaleur (TC).

Enfin, le dispositif selon l'invention n'est pas obligatoirement fixe. Il peut en effet être au moins en partie mobile. Par exemple, l'une au moins des parois du réceptacle (ou rail) radiatif peut être repliée lors du lancement (ou des déplacements), puis déployée pendant les phases de fonctionnement. On peut également envisager que l'une au moins de ses parois soit à surface et/ou géométrie variable de manière à contrôler l'efficacité du dispositif de dissipation en fonction des besoins.

## Revendications

1. Dispositif de dissipation de chaleur (D) pour un engin spatial comportant des tubes d'amplification (T) comprenant un corps (B) prolongé par un collecteur (C), ledit dispositif (D) comportant un panneau radiatif (PR) propre à être installé sensiblement parallèlement auxdits tubes d'amplification (T) et propre à être couplé thermiquement à leurs corps (D) de manière à rayonner vers l'extérieur une partie de la chaleur qu'ils produisent, **caractérisé en ce qu**'il comprend un réceptacle radiatif (RR), muni de parois (P1-P3) définissant un logement (L) propre à loger les collecteurs desdits tubes d'amplification, et propre à être couplé thermiquement auxdits collecteurs (C) par l'une au moins des ses parois de sorte que la chaleur qu'ils produisent soit répartie sur ladite paroi (P1) et entre lesdits collecteurs (C).

2. Dispositif selon la revendication 1, **caractérisé en ce qu'**il comprend au moins un moyen de répartition de chaleur (RC1) propre à assurer ledit couplage thermique entre lesdits collecteurs (C) et l'une desdites parois (P1) du réceptacle radiatif (RR), et agencé de manière à répartir entre lesdits collecteurs et sur ladite paroi la chaleur que les collecteurs produisent.

3. Dispositif selon l'une des revendications 1 et 2, **caractérisé en ce que** ledit réceptacle comprend trois parois définissant ledit logement (L).

4. Dispositif selon la combinaison des revendications 2 et 3, **caractérisé en ce qu**'il comprend un autre moyen de répartition de chaleur (RC2) propre à assurer ledit couplage thermique entre lesdits collecteurs (C) et l'une desdites parois (P3) du réceptacle radiatif (RR), et agencé de manière à répartir entre lesdits collecteurs et sur ladite autre paroi (P3) la chaleur que les collecteurs produisent.

5. Dispositif selon l'une des revendications 3 et 4, **caractérisé en ce que** lesdites trois parois (P1-P3) définissent un logement (L) de section transverse sensiblement en U.

6. Dispositif selon l'une des revendications 1 à 5, **caractérisé en ce que** chaque moyen de répartition de chaleur (RC1, RC2) comporte au moins une barre réalisée dans un matériau conducteur thermiquement.

7. Dispositif selon l'une des revendications 1 à 5, **caractérisé en ce que** chaque moyen de répartition de chaleur (RC1, RC2) comporte au moins un caloduc.

8. Dispositif selon l'une des revendications 1 à 5, **caractérisé en ce que** chaque moyen de répartition de chaleur (RC1, RC2) comporte au moins un tube dans lequel circule un fluide caloporteur.

9. Dispositif selon l'une des revendications 1 à 8, **caractérisé en ce que** ledit réceptacle radiatif (RR) est réalisé dans un matériau choisi parmi au moins l'aluminium et le magnésium.

10. Dispositif selon l'une des revendications 1 à 9, **caractérisé en ce que** ledit réceptacle radiatif (RR) est solidarisé auxdits collecteurs (C).

11. Dispositif selon l'une des revendications 1 à 10, **caractérisé en ce que** chaque moyen de répartition de chaleur (RC1, RC2) est intercalé entre lesdits collecteurs (C) et l'une desdites parois (P1) du réceptacle radiatif (RR).

12. Dispositif selon l'une des revendications 1 à 10, **caractérisé en ce que** chaque moyen de répartition de chaleur (RC1, RC2) est placé à l'extérieur dudit réceptacle radiatif (RR), l'une au moins desdites parois dudit réceptacle (RR) présentant une face interne au contact desdits collecteurs et une face externe au contact desdits moyens de répartition de chaleur (RC1, RC2).

13. Dispositif selon l'une des revendications 1 à 10, **caractérisé en ce que** chaque moyen de répartition de chaleur (RC1, RC2) est intégré dans une partie creuse que comprend l'une au moins des parois dudit réceptacle (RR).

14. Dispositif selon l'une des revendications 1 à 13, **caractérisé en ce qu'**il comprend des moyens de transfert de chaleur (TC) agencés pour assurer le couplage thermique dudit panneau radiatif (PR) et desdits corps (B) des tubes d'amplification (T).

15. Dispositif selon la revendication 14, **caractérisé en ce que** lesdits moyens de transfert de chaleur (TC) comprennent au moins un caloduc.

16. Dispositif selon la revendication 14, **caractérisé en ce que** lesdits moyens de transfert de chaleur (TC) comprennent au moins un tube dans lequel circule un fluide caloporteur.

17. Dispositif selon l'une des revendications 14 à 16, **caractérisé en ce que** lesdits moyens de transfert de chaleur (TC) sont intercalés entre ledit panneau radiatif (PR) et lesdits corps (B) des tubes d'amplification (T) de manière à assurer leur couplage thermique.

18. Dispositif selon l'une des revendications 14 à 16, **caractérisé en ce que** lesdits moyens de transfert de chaleur (TC) sont placés à l'extérieur dudit panneau radiatif (PR), ce dernier présentant une face interne au contact desdits corps (B) et une face externe au contact desdits moyens de transfert de chaleur (TC).

19. Dispositif selon l'une des revendications 14 à 16, **caractérisé en ce que** lesdits moyens de transfert de chaleur (TC) sont intégrés dans une partie creuse que comprend ledit panneau radiatif (PR).

20. Engin spatial comportant des tubes d'amplification (T) comprenant un corps (B) prolongé par un collecteur (C), **caractérisé en ce qu**'il comprend au moins un dispositif de dissipation de chaleur (D) selon l'une des revendications précédentes.

21. Engin spatial selon la revendication 20, **caractérisé en ce qu**'il comprend au moins deux dispositifs de dissipation de chaleur (D) munis de réceptacles radiatifs (RR) sensiblement parallèles entre eux et destinés à s'étendre, en fonctionnement, dans des plans sensiblement perpendiculaires à une direction nord-sud.

22. Engin spatial selon l'une des revendications 20 et 21, **caractérisé en ce qu'**il comprend au moins deux dispositifs de dissipation de chaleur (D) munis de réceptacles radiatifs (RR) sensiblement parallèles entre eux et destinés à s'étendre, en fonctionnement, dans des plans sensiblement perpendiculaires à une direction est-ouest.

23. Engin spatial selon l'une des revendications 20 à 22, **caractérisé en ce qu**'il est choisi dans un groupe comprenant les satellites, les sondes spatiales, les stations orbitales et les vaisseaux spatiaux.

## Claims

1. Heat dissipating system for a spacecraft (D) comprising amplifier tubes (T) comprising a body (B) extended by a collector (C), said system (D) comprising a radiating panel (PR) adapted to be installed substantially parallel to said amplifier tubes (T) and to be thermally coupled to their bodies (D) in such a manner as to radiate to the exterior a portion of the heat that they produce, **characterized in that** it comprises a radiating receptacle (RR) having walls (P1-P3) defining a housing (L) adapted to accommodate the collectors of said amplifier tubes and to be thermally coupled to said collectors (C) by at least one of its walls so that the heat that they produce is distributed over said wall (P1) and between said collectors (C).

2. System according to Claim 1, **characterized in that** it comprises at least one heat distributing means (RC1) adapted to provide said thermal coupling between said collectors (C) and one of said walls (P1) of the radiating receptacle (RR) and arranged so as to distribute the heat that the collectors produce between said collectors and over said wall.

3. System according to either of Claims 1 and 2, **characterized in that** said receptacle comprises three walls defining said housing (L).

4. System according to Claim 2 in conjunction with Claim 3, **characterized in that** it comprises another heat distributing means (RC2) adapted to provide said thermal coupling between said collectors (C) and one of said walls (P3) of the radiating receptacle (RR) and arranged so as to distribute the heat that the collectors produce between said collectors and over said other wall (P3).

5. System according to either of Claims 3 and 4, **characterized in that** said three walls (P1-P3) define a housing (L) having a substantially U-shaped cross section.

6. System according to one of Claims 1 to 5, **characterized in that** each heat distributing means (RC1, RC2) comprises at least one rod made from a thermally conductive material.

7. System according to one of Claims 1 to 5, **characterized in that** each heat distributing means (RC1, RC2) comprises at least one heat pipe.

8. System according to one of Claims 1 to 5, **characterized in that** each heat distributing means (RC1, RC2) comprises at least one tube in which a heat exchange fluid circulates.

9. System according to one of Claims 1 to 8, **characterized in that** said radiating receptacle (RR) is made from aluminium or magnesium.

10. System according to one of Claims 1 to 9, **characterized in that** said radiating receptacle (RR) is fastened to said collectors (C).

11. System according to one of Claims 1 to 10, **characterized in that** each heat distributing means (RC1, RC2) is interleaved between said collectors (C) and one of said walls (P1) of the radiating receptacle (RR).

12. System according to one of Claims 1 to 10, **characterized in that** each heat distributing means (RC1, RC2) is placed outside said radiating receptacle (RR), at least one of said walls of said receptacle (RR) having an inside face in contact with said collectors and an outside face in contact with said heat distributing means (RC1, RC2).

13. System according to one of Claims 1 to 10, **characterized in that** each heat distributing means (RC1, RC2) is integrated into a hollow portion of at least one of the walls of said receptacle (RR).

14. System according to one of Claims 1 to 13, **characterized in that** it comprises heat transfer means (TC) adapted to provide the thermal coupling of said radiating panel (PR) and said bodies (B) of the amplifier tubes (T).

15. System according to Claim 14, **characterized in that** said heat transfer means (TC) comprise at least one heat pipe.

16. System according to Claim 14, **characterized in that** said heat transfer means (TC) comprise at least one tube in which a heat exchange fluid circulates.

17. System according to one of Claims 14 to 16, **characterized in that** said heat transfer means (TC) are interleaved between said radiating panel (PR) and said bodies (B) of the amplifier tubes (T) to provide the thermal coupling thereof.

18. System according to one of Claims 14 to 16, **characterized in that** said heat transfer means (TC) are placed outside said radiating panel (PR) which has an inside face in contact with said bodies (B) and an outside face in contact with said heat transfer means (TC).

19. System according to one of Claims 14 to 16, **characterized in that** said heat transfer means (TC) are integrated into a hollow portion of said radiating panel (PR).

20. Spacecraft comprising amplifier tubes (T) comprising a body (B) extended by a collector (C), **characterized in that** it comprises at least one heat dissipating system (D) according to one of the preceding claims.

21. Spacecraft according to Claim 20, **characterized in that** it comprises at least two heat dissipating systems (D) provided with substantially parallel radiating receptacles (RR) and intended to lie, in operation, in planes substantially perpendicular to a north-south direction.

22. Spacecraft according to either of Claims 20 and 21, **characterized in that** it comprises at least two heat dissipating systems (D) provided with substantially parallel radiating receptacles (RR) and intended to lie, in operation, in planes substantially perpendicular to an east-west direction.

23. Spacecraft according to one of Claims 20 to 22, **characterized in that** it is chosen from a group comprising satellites, space probes, orbiting space stations and/or spaceships.

## Patentansprüche

1. Wärmeabführungsvorrichtung (D) für einen Raumflugkörper mit Verstärkungsröhren (T), die jeweils einen durch einen Kollektor (C) verlängerten Körper (B) aufweisen, wobei die Vorrichtung (D) eine Strahlungsplatte (PR) enthält, die im Wesentlichen parallel zu den Verstärkungsröhren (T) installiert werden kann und die mit deren Körpern (D) thermisch gekoppelt werden kann, so dass ein Teil der Wärme, die sie erzeugen, nach außen abgestrahlt wird, **dadurch gekennzeichnet, dass** sie einen Strahlungsauffang (RR) enthält, der mit Wänden (P1-P3) versehen ist, die einen Aufnahmesitz (L) definieren, der die Kollektoren der Verstärkungsröhren aufnehmen kann und der mit den Kollektoren (C) durch wenigstens eine seiner Wände thermisch gekoppelt werden kann, derart, dass die Wärme, die sie erzeugen, an der Wand (P1) und zwischen den Kollektoren (C) verteilt wird.

2. Vorrichtung nach Anspruch 1, **dadurch gekennzeichnet, dass** sie wenigstens ein Wärmeverteilungsmittel (RC1) enthält, das die thermische Kopplung zwischen den Kollektoren (C) und einer der Wände (P1) des Strahlungsauffangs (RR) sicherstellen kann und das so beschaffen ist, dass die Wärme, die die Kollektoren erzeugen, zwischen den Kollektoren und an der Wand verteilt wird.

3. Vorrichtung nach einem der Ansprüche 1 und 2, **dadurch gekennzeichnet, dass** der Auffang drei Wände aufweist, die den Aufnahmesitz (L) definieren.

4. Vorrichtung gemäß der Kombination der Ansprüche 2 und 3, **dadurch gekennzeichnet, dass** sie ein weiteres Wärmeverteilungsmittel (RC2) enthält, das die thermische Kopplung zwischen den Kollektoren (C) und einer der Wände (P3) des Strahlungsauffangs (RR) sicherstellen kann und das so beschaffen ist, dass es die Wärme, die die Kollektoren erzeugen, zwischen den Kollektoren und an der anderen Wand (P3) verteilt.

5. Vorrichtung nach einem der Ansprüche 3 und 4, **dadurch gekennzeichnet, dass** die drei Wände (P1-P3) einen Aufnahmesitz (L) mit einem im Wesentlichen U-förmigen Querschnitt definieren.

6. Vorrichtung nach einem der Ansprüche 1 bis 5, **dadurch gekennzeichnet, dass** jedes Wärmeverteilungsmittel (RC1, RC2) wenigstens einen Stab aufweist, der aus einem wärmeleitenden Material verwirklicht ist.

7. Vorrichtung nach einem der Ansprüche 1 bis 5, **dadurch gekennzeichnet, dass** jedes Wärmeverteilungsmittel (RC1, RC2) wenigstens ein Wärmerohr enthält.

8. Vorrichtung nach einem der Ansprüche 1 bis 5, **dadurch gekennzeichnet, dass** jedes Wärmeverteilungsmittel (RC1, RC2) wenigstens ein Rohr enthält, in dem ein Wärmeübertragungsfluid zirkuliert.

9. Vorrichtung nach einem der Ansprüche 1 bis 8, **dadurch gekennzeichnet, dass** der Strahlungsauffang (RR) aus einem Material verwirklicht ist, das wenigstens aus Aluminium und Magnesium gewählt ist.

10. Vorrichtung nach einem der Ansprüche 1 bis 9, **dadurch gekennzeichnet, dass** der Strahlungsauffang (RR) mit den Kollektoren (C) fest verbunden ist.

11. Vorrichtung nach einem der Ansprüche 1 bis 10, **dadurch gekennzeichnet, dass** jedes Wärmeverteilungsmittel (RC1, RC2) zwischen die Kollektoren (C) und eine der Wände (P1) des Strahlungsauffangs (RR) eingefügt ist.

12. Vorrichtung nach einem der Ansprüche 1 bis 10, **dadurch gekennzeichnet, dass** jedes Wärmeverteilungsmittel (RC1, RC2) außerhalb des Strahlungsauffangs (RR) angeordnet ist, wobei wenigstens eine der Wände des Auffangs (RR) eine Innenseite in Kontakt mit den Kollektoren und eine Außenseite in Kontakt mit den Wärmeverteilungsmitteln (RC1, RC2) aufweist.

13. Vorrichtung nach einem der Ansprüche 1 bis 10, **dadurch gekennzeichnet, dass** jedes Wärmeverteilungsmittel (RC1, RC2) in einen hohlen Teil integriert ist, den wenigstens eine der Wände des Auffangs (RR) aufweist.

14. Vorrichtung nach einem der Ansprüche 1 bis 13, **dadurch gekennzeichnet, dass** sie Wärmeübertragungsmittel (TC) enthält, die so beschaffen sind, dass sie die thermische Kopplung der Strahlungsplatte (PR) und der Körper (B) der Verstärkungsröhren (T) sicherstellen.

15. Vorrichtung nach Anspruch 14, **dadurch gekennzeichnet, dass** die Wärmeübertragungsmittel (TC) wenigstens ein Wärmerohr enthalten.

16. Vorrichtung nach Anspruch 14, **dadurch gekennzeichnet, dass** die Wärmeübertragungsmittel (TC) wenigstens ein Rohr enthalten, in dem ein Wärmeübertragungsfluid zirkuliert.

17. Vorrichtung nach einem der Ansprüche 14 bis 16, **dadurch gekennzeichnet, dass** die Wärmeübertragungsmittel (TC) zwischen die Strahlungsplatte (PR) und die Körper (B) der Verstärkungsröhren (T) eingefügt sind, derart, dass ihre thermische Kopplung gewährleistet ist.

18. Vorrichtung nach einem der Ansprüche 14 bis 16, **dadurch gekennzeichnet, dass** die Wärmeübertragungsmittel (TC) außerhalb der Strahlungsplatte (PR) angeordnet sind, wobei diese Letztere eine Innenseite in Kontakt mit den Körpern (B) und eine Außenseite in Kontakt mit den Wärmeübertragungsmitteln (TC) aufweist.

19. Vorrichtung nach einem der Ansprüche 14 bis 16, **dadurch gekennzeichnet, dass** die Wärmeübertragungsmittel (TC) in einen hohlen Teil integriert sind, den die Strahlungsplatte (PR) aufweist.

20. Raumflugkörper, der Verstärkungsröhren (T) enthält, die einen durch einen Kollektor (C) verlängerten Körper (B) enthalten, **dadurch gekennzeichnet, dass** er wenigstens eine Wärmeabführungsvorrichtung (D) nach einem der vorhergehenden Ansprüche enthält.

21. Raumflugkörper nach Anspruch 20, **dadurch gekennzeichnet, dass** er wenigstens zwei Wärmeabführungsvorrichtungen (D) enthält, die mit Strahlungsauffängen (RR) versehen sind, die zueinander im Wesentlichen parallel sind und dazu bestimmt sind, sich im Betrieb in Ebenen zu erstrecken, die zur Nord-Süd-Richtung im Wesentlichen senkrecht sind.

22. Raumflugkörper nach einem der Ansprüche 20 und 21, **dadurch gekennzeichnet, dass** er wenigstens zwei Wärmeabführungsvorrichtungen (D) enthält, die mit Strahlungsauffängen (RR) versehen sind, die zueinander im Wesentlichen parallel sind und dazu bestimmt sind, sich im Betrieb in Ebenen zu erstrecken, die zu einer Ost-West-Richtung im Wesentlichen senkrecht sind.

23. Raumflugkörper nach einem der Ansprüche 20 bis 22, **dadurch gekennzeichnet, dass** er aus einer Gruppe gewählt ist, die Satelliten, Raumsonden, Orbitalstationen und Raumschiffe enthält.
